# EUROPÄISCHE PATENTSCHRIFT

(11) **EP 3 496 938 B1**
(45) Veröffentlichungstag und Bekanntmachung des Hinweises auf die Patenterteilung: **03.06.2020**
(21) Anmeldenummer: 17749464.8
(22) Anmeldetag: 08.08.2017
(51) Int. Cl.: B29C 73/22, B29D 30/06

(54) **DICHTMITTELKAPSEL, SCHLAUCHLOSE RADBAUGRUPPE UND VERFAHREN ZUR MONTAGE EINES SCHLAUCHLOSEN ZWEIRADREIFENS**
SEALANT CAPSULE, TUBELESS WHEEL ASSEMBLY, AND METHOD FOR ASSEMBLING A TUBELESS TWO-WHEELED VEHICLE TIRE
CAPSULE D'AGENT D'ÉTANCHÉITÉ, MODULE DE ROUE SANS CHAMBRE, ET PROCÉDÉ DE MONTAGE D'UN PNEUMATIQUE DE DEUX ROUES SANS CHAMBRE

(30) Priorität: 10.08.2016 DE 102016009711
(43) Veröffentlichungstag der Anmeldung: 19.06.2019
(73) Patentinhaber: Ralf Bohle GmbH, 51580 Reichshof (DE)
(72) Erfinder: DÖHL, Ludwig, 93346 Ihrlerstein (DE)
(74) Vertreter: Patentanwälte Ruff, Wilhelm, Beier, Dauster & Partner mbB
(86) Internationale Anmeldenummer: PCT/EP2017/070064
(87) Internationale Veröffentlichungsnummer: WO 2018/029192

(56) Entgegenhaltungen:
- US-A- 3 910 334

## Beschreibung

Die Erfindung befasst sich mit einer Dichtmittelkapsel für die Montage eines schlauchlosen Reifens für ein Zweirad auf einer Zweiradfelge für schlauchlose Reifen, einer schlauchlosen Radbaugruppe mit einer Dichtmittelkapsel sowie mit einem Verfahren zur Montage eines schlauchlosen Reifens mittels einer derartigen Dichtmittelkapsel.

In konventionellen Rädern für Zweiräder, insbesondere für Fahrräder, ist zwischen der Felge und dem Reifen ein sich entlang des gesamten Radumfangs erstreckender torusförmiger Schlauch angeordnet, welcher über ein Ventil druckbeaufschlagbar ist, das im montierten Zustand des Reifens auf der Felge ein in der Felge ausgebildetes Ventilloch durchsetzt. Bei der Montage eines solchen Rades wird üblicherweise zunächst der Schlauch in den Reifen, auch Mantel genannt, eingelegt, wonach der Reifen samt des darin eingelegten Schlauches auf die Felge aufgezogen wird. Dazu wird das Ventil in das Ventilloch der Felge eingeführt und die Reifenwülste gegebenenfalls unter Zuhilfenahme von Reifenhebern nacheinander über mindestens eines der Felgenhörner der Felge gestülpt, wonach der Reifen samt dem darin angeordneten Schlauch über seine Reifenwülste zwischen den Felgenhörern beweglich gehalten wird. Durch die mit dem anschließenden Aufpumpen / Druckbeaufschlagen einhergehende Volumenvergrößerung des Schlauches werden die Reifenwülste gegen die Felgenhörner gepresst, sodass der Verbund aus Reifen, Schlauch und Felge in sich stabil ist.

Im professionellen und semiprofessionellen Einsatzbereich von Fahrradreifen ist es grundsätzlich wünschenswert, auf den Schlauch zu verzichten. Dadurch reduziert sich das Gewicht des Fahrradreifens und seine Rolleigenschaften verbessern sich. Darüber hinaus zeichnen sich schlauchlose Fahrradreifen durch eine bessere Dämpfung bzw. höheren Komfort aus und sie sind weniger anfällig für Pannen.

Reifen zur schlauchlosen Montage (kurz: "schlauchlose Reifen", auch als "Tubeless Reifen" bezeichnet) werden ohne Schlauch auf der Felge montiert. Zum Abdichten des Reifens gegenüber der Felge wird eine Dichtflüssigkeit entweder nach Herausnahme eines Ventileinsatzes eines in der Felge verbauten Ventils durch die Ventilöffnung oder vor dem Aufziehen des Reifens auf die Felge in einen Innenbereich zwischen Reifen und Felge eingegossen.

Die schlauchlose Montage von Fahrradreifen gestaltet sich daher vergleichsweise umständlich und zeitaufwendig. Insbesondere kann es bei beiden vorgenannten Methoden des Einfüllens der Dichtflüssigkeit zu einem ungewünschten Austreten der Dichtflüssigkeit aus dem Reifen und damit einhergehenden Verschmutzungen der Montagestätte kommen. Aus diesem Grund werden Kompletträder zumeist nicht mit schlauchlosen Reifen angeboten. Ferner ist der Vertrieb einzelner unmontierter schlauchloser Reifen mit darin befindlicher Dichtflüssigkeit wenig praktikabel, da die Dichtflüssigkeit im Regelfall mit Luft in Kontakt gelangen und dadurch austrocknen würde.

Vor diesem Hintergrund ist es eine Aufgabe der vorliegenden Erfindung, eine Dichtmittelkapsel bereitzustellen, die es ermöglicht, einen schlauchlosen Reifen schnell, einfach und sauber auf eine Felge für den schlauchlosen Reifen zu montieren. Darüber hinaus ist es eine Aufgabe der vorliegenden Erfindung, eine schlauchlose Radbaugruppe mit einer derartigen Dichtmittelkapsel sowie ein Verfahren zur Montage eines schlauchlosen Reifens unter Verwendung einer derartigen Dichtmittelkapsel bereitzustellen.

Aus der US-Patentschrift 3,910,334 ist ein schlauchloser Reifen mit Dichtmittelkapseln im Inneren des Reifens bekannt. Die Dichtmittelkapseln sollen zerstört werden, wenn der Reifen nach einem Luftverlust weitergefahren wird. Die Kapseln sollen dann durch mechanische Einwirkung, wenn also der Reifen kurzfristig plattgedrückt wird, aufbrechen, das Dichtmittel soll sich verteilen und dann soll der Reifen wieder aufgepumpt werden.

Diese Aufgabe wird gelöst durch eine Dichtmittelkapsel mit den Merkmalen des Anspruchs 1, eine schlauchlose Radbaugruppe mit den Merkmalen des Anspruchs 9 sowie ein Verfahren zur Montage eines schlauchlosen Reifens mit den Merkmalen des Anspruchs 13.

Eine Dichtmittelkapsel ist für die (schlauchlose) Montage eines schlauchlosen Reifens für ein Zweirad, insbesondere für ein Fahrrad, vorgesehen, der zwei seitlich eines Laufflächenabschnitts angeordnete Reifenwülste umfasst, welche zur Anlage an jeweils ein Felgenhorn einer Zweiradfelge für einen schlauchlosen Reifen ausgebildet sind. Die Dichtmittelkapsel weist eine Hülle auf, die einen zumindest teilweise mit einer Dichtflüssigkeit gefüllten Innenraum der Dichtmittelkapsel zumindest bei in einer Umgebung der Dichtmittelkapsel herrschendem Atmosphärendruck gegenüber der Umgebung abdichtet und ist in einen im montierten Zustand des schlauchlosen Reifens auf der Felge durch den Reifen und die Felge begrenzten Innenbereich des Reifens einbringbar. Dort angeordnet ist die Dichtmittelkapsel dazu ausgebildet, infolge eines Öffnens der Hülle zumindest einen Teil der Dichtflüssigkeit in die Umgebung der Dichtmittelkapsel im Innenbereich des Reifens freizugeben.

Zumindest ein Teil der Dichtflüssigkeit ist dazu geeignet, zumindest im auf der Felge montierten und druckbeaufschlagten Zustand des schlauchlosen Reifens zum Abdichten des Reifens gegenüber der Felge bedingt durch eine auf den Teil der Dichtflüssigkeit einwirkende Kraft in einen Bereich eines Zwischenraums zwischen jedem Reifenwulst und dem zugehörigen Felgenhorn zu fließen und dort zu erstarren. Die das Fließen bewirkende Kraft kann sich insbesondere aus der Schwerkraft und optional einer daraus resultierenden, entlang der Innenumfangsfläche des Reifens wirkenden Hangabtriebskraft zusammensetzen. Mit anderen Worten, die im Innenbereich des Reifens freigegebene Dichtflüssigkeit lässt sich durch Drehen des Reifens um seine beispielsweise horizontal ausgerichtete Achse entlang der Innenumfangsfläche des Reifens verteilen.

Als "schlauchloser Reifen" wird hier ein Reifen bezeichnet, der geeignet ist, ohne Schlauch verwendet, d.h. gefahren, zu werden. Etwaige undichte Stellen, durch die Luft aus dem Reifen in die Umgebung entweichen kann, können insofern durch die Dichtflüssigkeit abgedichtet werden. Als schlauchlose Reifen werden hier auch Reifen mit der Bezeichnung "tubeless ready", also "fertig zur schlauchlosen Montage", angesehen. Es ist ferner denkbar, dass auch herkömmliche Reifen unter Verwendung der Dichtflüssigkeit schlauchlos gefahren werden.

Die Dichtmittelkapsel ist bevorzugt nicht schlauch- bzw. Torus-förmig ausgestaltet. Vorzugsweise erstreckt sie sich im Innenbereich des Reifens lediglich entlang eines Bruchteils des Umfangs des Reifens, insbesondere entlang weniger als der Hälfte oder gar weniger als ein Viertel, ein Achtel, ein Sechzehntel oder ein Zweiunddreißigstel dieses Umfangs. Beispielsweise ist die Dichtmittelkapsel weniger als 10 cm lang und jeweils weniger als 7 cm breit und hoch. Das Volumen des Innenraums der Dichtmittelkapsel kann höchstens 500 ml, höchstens 200 ml oder höchstens 150 ml betragen. Vorzugsweise beträgt das Volumen des Innenraums höchstens 120 ml, höchstens 100 ml oder höchstens 30ml. Höchstvorzugsweise beträgt es 80 ml oder 60 ml. Zur Befestigung an Reifen und/oder Felge kann die Dichtmittelkapsel eine Halteeinrichtung an der Außenoberfläche der Hülle aufweisen, beispielsweise in Form eines Klebstoffes, Klebebandes oder dergleichen.

In einer Ausführungsform wird das Öffnen der Kapsel bewirkt durch eine Änderung der Umgebungsbedingungen in (unmittelbarer) Umgebung der Kapsel, d.h. an einer Außenoberfläche der Hülle. Beispielsweise kann es sich bei dieser Änderung um eine Erhöhung des statischen Gasdruckes (des Luftdruckes bei Füllung des Reifens mit Luft) und/oder der Temperatur im Innenbereich des Reifens infolge des Aufpumpens des Reifens handeln. Weitere Änderungen der Umgebungsbedingungen stellen dar: in Kontakt bringen der Dichtmittelkapsel mit einer weiteren Flüssigkeit, beispielsweise einer wässrigen Lösung, bevorzugt Wasser; in Kontakt bringen der Dichtmittelkapsel mit einer eine Öffnung in der Hülle bildenden Chemikalie (beispielsweise einer Säure oder einem (nicht-wässrigem) Lösungsmittel), die dazu eingerichtet ist, mit dem Material der Hülle vorzugsweise erst nach Erhöhung des Druckes über den Atmosphärendruck chemisch zu reagieren, um diese zumindest abschnittsweise für die Dichtflüssigkeit durchlässig werden zu lassen oder zu zersetzen, sowie eine Anisotrope Erhöhung des auf die äußere Oberfläche der Hülle wirkenden Druckes Weitere Vorrichtungen zum Öffnen der Dichtmittelkapsel werden im Folgenden näher erläutert.

Die Hülle kann zum Beispiel zumindest abschnittsweise aus einem Material hergestellt sein, das eine Schmelztemperatur aufweist, die geringer ist als die Schmelztemperatur des Reifenmaterials. Vorzugsweise ist die Schmelztemperatur dieses Hüllenabschnitts geringer als die Schmelztemperatur aller übrigen Bestandteile des Rades, für das die Dichtmittelkapsel vorgesehen ist. Insbesondere kann die Schmelztemperatur geringer sein als die Schmelztemperatur des Felgenmaterials und/oder der für das Ventil verwendeten Materialien. Die Schmelztemperatur kann bei einem Druck zwischen 1 und 10 bar beispielsweise höchstens 80 °C, 70 °C, 60 °C, 50 °C oder 40 °C betragen. Bevorzugt beträgt die Schmelztemperatur bei diesen Drücken zwischen 45 °C und 60 °C. Bei diesen Temperaturen kann die Dichtmittelkapsel leicht gehandhabt werden, insbesondere in den Reifen eingebracht werden, ohne vor dem Einbringen in den Reifen zu schmelzen. Durch eine Temperaturerhöhung an einem Teil der Hülle kann die Hülle bei Bedarf, insbesondere nach dem Einbringen in den Innenbereich des Reifens in dessen auf der Felge montierten Zustand, zumindest stellenweise geschmolzen werden, sodass die Dichtflüssigkeit aus der Dichtmittelkapsel entweichen kann, insbesondere in den Innenbereich des Reifens herausfließen kann.

Ferner kann die Dichtmittelkapsel einen Hüllenabschnitt aufweisen, der aus einem elastischen Material hergestellt ist. Bevorzugt besteht die gesamte Hülle aus dem elastischen Material. Bei dem elastischen Material kann es sich zum Beispiel um eine elastische Folie handeln. Um diese Folie undicht werden zu lassen, kann die Dichtmittelkapsel nach dem Einbringen in den Innenbereich des Reifens dadurch geöffnet werden, dass ein Teil des Reifens, in dem sich die Dichtmittelkapsel befindet, durch den Anwender komprimiert wird. Die Druckverteilung an der Außenoberfläche der in diesem Teil des Reifens befindlichen Dichtmittelkapsel wird dadurch anisotrop erhöht, d.h. die Dichtmittelkapsel wird durch die Kompression eingeschnürt, sodass das sich in der Dichtmittelkapsel befindende Medium, insbesondere die Dichtflüssigkeit, in einer Richtung senkrecht zur Kompressionsrichtung ausweicht. Die hierdurch bedingte Streckung der Hülle an ihrem/ihren von der Kompressionsstelle beabstandeten Ende/n führt nach Überschreitung der Zerreißgrenze des Hüllenmaterials zur Ausbildung einer Öffnung (z.B. Form eines Risses) in der Hülle, durch die die Dichtflüssigkeit aus der Dichtmittelkapsel austreten kann.

Auf ähnliche Weise kann die Dichtmittelkapsel geöffnet werden, indem sie, wenn im Innenbereich des Reifens beispielsweise Atmosphärendruck herrscht, zwischen dem Reifen und der Felge komprimiert / gewalkt wird.

Ferner kann die Hülle Ventilmittel umfassen, die dazu eingerichtet sind, den Innenraum mit der Umgebung fluidisch zu koppeln, sobald ein vorbestimmter Differenzdruck zwischen Innenraum und Umgebung erreicht oder überschritten wird. Insbesondere kann die Hülle zumindest abschnittsweise aus einem porösen Material, welches eine oder mehrere Poren aufweist, hergestellt sein. Vorzugsweise ist eine Vielzahl Poren gleichmäßig über den gesamten Umfang der Hülle verteilt. Jede der Poren ist zumindest bei Stillstand der Dichtmittelkapsel und bei Atmosphärendruck in der Umgebung der Dichtmittelkapsel für die Dichtflüssigkeit im Wesentlichen verschlossen.

Erst durch Erhöhung des bezüglich der Hülle innenseitigen Druckes im Bereich der Pore wird die Pore für die Dichtflüssigkeit durchlässig. Diese Erhöhung des Innendrucks kann wie vorstehend beschrieben erfolgen, beispielsweise durch Komprimierung eines Teils der Dichtmittelkapsel, sodass die Dichtflüssigkeit in den übrigen Teil der Dichtmittelkapsel gedrückt wird und dort durch die geöffneten Poren aus der Dichtmittelkapsel entweicht. Beispielsweise kann die sich im Innenbereich des Reifens befindende Dichtmittelkapsel beim Drehen des Reifens fliehkraftbedingt gegen die Innenoberfläche des Reifens gedrückt und dadurch anisotrop komprimiert bzw. in Umfangsrichtung gestreckt werden. Die Dichtflüssigkeit streckt dabei die Hülle in Umfangsrichtung des Reifens. Falls der Reifen zuvor druckbeaufschlagt worden ist, kann dieser Vorgang auch während der Fahrt ab Überschreitung einer vorbestimmten Geschwindigkeit von selbst erfolgen. Mit anderen Worten, bei schneller Rotation des Reifens bzw. Rades wird die Kapsel durch die Fliehkraft gegen die Innenoberfläche des Reifens gepresst und dadurch komprimiert, sodass die Dichtflüssigkeit durch die Poren aus der Dichtmittelkapsel herausgedrückt wird. Bei dem porösen Material kann es sich beispielsweise um ein elastisches Folienmaterial handeln.

In einer bevorzugten Variante ist im Innenraum der Dichtmittelkapsel zumindest ein starrer Körper angeordnet, der eine höhere Festigkeit und/oder Steifigkeit aufweist als die Hülle. Vorzugsweise weist die Hülle in diesem Fall auch den elastischen Abschnitt auf. Höchstvorzugsweise ist die gesamte Hülle hier elastisch. Der starre Körper kann länglich / stabförmig ausgebildet sein. Bei Druckbeaufschlagung des mit der Dichtmittelkapsel versehenen Reifens wird die Dichtmittelkapsel im Bereich des elastischen Abschnitts der Hülle komprimiert. Da der starre Körper dem erhöhten Druck standhält und der elastische Abschnitt der Hülle auf den starren Körper aufgedrückt wird, ist vorgesehen, dass der starre Körper nach Überschreiten der Zerreißgrenze den elastischen Abschnitt durchtrennt. Die Dichtflüssigkeit kann durch die erzeugte Perforation aus der Dichtmittelkapsel austreten.

Um das Durchtrennen sicherzustellen, kann der starre Körper an seiner Oberfläche eine oder mehrere Trennmittel, z.B. Spitzen, aufweisen, die geeignet sind, die Hülle zu durchtrennen, aber nicht den Reifen beschädigen. Darüber hinaus kann der starre Körper zumindest abschnittsweise eine geringere Dichte aufweisen als die Dichtflüssigkeit, um den starren Körper gegenüber der Dichtflüssigkeitsoberfläche auszurichten.

Die Hülle der Dichtmittelkapsel kann ferner selbst zumindest einen starren Abschnitt aufweisen. Bevorzugt ist die gesamte Hülle aus einem starren Material hergestellt. In dem starren Abschnitt kann eine Sollbruchstelle ausgebildet sein, die bei Erhöhung des im Bereich der Sollbruchstelle auf die Hülle wirkenden Außendrucks, insbesondere infolge des Druckbeaufschlagens des Reifens, bricht, um die Dichtflüssigkeit aus der Dichtmittelkapsel ausströmen zu lassen. Um diesen Vorgang zu begünstigen, kann in der Dichtmittelkapsel beispielsweise ein Unterdruck herrschen. Darüber hinaus ist es denkbar, dass der starre Abschnitt einstückig mit dem vorstehend beschriebenen starren Körper ausgebildet ist. Der starre Körper kann beispielsweise von der Innenoberfläche des starren Abschnitts in den Innenraum der Dichtmittelkapsel hineinragen. In diesem Fall ist der elastische Abschnitt bevorzugt auf einer der Innenoberfläche des starren Abschnitts, von der der starre Körper abragt, entgegengesetzten Seite der Hülle angeordnet, sodass bei Erhöhung des Druckes in der Umgebung der Kapsel der elastische Körper gegen den starren Körper gedrückt wird, der dazu eingerichtet ist, den elastischen Körper zu öffnen / zu durchtrennen.

Der starre Abschnitt kann eine Öffnung aufweisen, die vorzugsweise durch den elastischen Abschnitt geschlossen ist. Durch Ändern der Drückverhältnisse an der Oberfläche des elastischen Abschnitts kann der elastische Abschnitt somit deformiert werden und nach Erreichen der Zerreißgrenze seines Materials geöffnet werden, sodass die Dichtflüssigkeit ausfließen kann. Beispielsweise kann der Luftdruck an der Oberfläche des elastischen Abschnitts nach dem Einbringen der Dichtmittelkapsel in den Innenbereich des Reifens durch Aufpumpen des Reifens erhöht werden. Je höher der Druck ist, desto weiter wird der elastische Abschnitt der Hülle in den Innenraum der Dichtmittelkapsel hinein deformiert, bis die Zerreißgrenze seines Materials überschritten wird.

Der vorgenannte oder ein weiterer starrer Abschnitt kann infolge einer durch eine äußere Kraft bewirkten Kompression der Hülle, insbesondere zwischen dem Reifen und der Felge, zumindest teilweise in reiskorngroße Einzelteile zerbrochen werden. Hierfür kann vorgesehen sein, dass die Hülle eine Vielzahl Sollbruchstellen aufweist, die die Einzelteile umranden. Solche Einzelteile können bis zu 10 mm lang und jeweils bis zu 4 mm breit und hoch sein. Die Kompression kann wiederum realisiert werden durch (manuelles) Zusammendrücken des Reifens oder Überfahren bzw. Walken der Dichtmittelkapsel (bei schwach, zum Beispiel mit höchstens 1,2 bar, aufgepumptem Reifen).

In einer weiteren Variante umfasst die Dichtmittelkapsel einen mit der Hülle in Verbindung stehenden Zugdraht, der dazu eingerichtet ist, infolge einer Relativbewegung zwischen dem Zugdraht und einem an den Zugdraht angrenzenden Abschnitt der Hülle, die Hülle für das Freigeben der Dichtflüssigkeit zu öffnen. Der Zugdraht kann beispielsweise einen länglichen, drahtförmigen Abschnitt und einen quer zum länglichen Abschnitt angeordneten, mit diesem verbundenen Endabschnitt aufweisen. Der Endabschnitt ist vorzugsweise im Innenraum der Kapsel angeordnet und der längliche Abschnitt durchsetzt die Hülle der Dichtmittelkapsel. Ferner kann der Endabschnitt an der Hülle, innen- oder außenseitig, befestigt sein, beispielsweise über eine Klebeverbindung. Beispielsweise können sowohl der längliche Abschnitt als auch der Endabschnitt drahtförmig ausgebildet und/oder aus dem gleichen Werkstoff hergestellt sein. Als Werkstoffe für den länglichen Abschnitt und/oder den Endabschnitt kommen beispielsweise Kunststoff oder Metall in Frage. Durch Entfernen des Zugdrahtes von der Dichtmittelkapsel wird die Hülle der Dichtmittelkapsel geöffnet. Der längliche Abschnitt kann sich aus dem Innenbereich des Reifens, beispielsweise durch das Ventil oder über die Kontaktfläche zwischen einem Reifenwulst und dem entsprechenden Felgenhorn, heraus erstrecken. Dies ermöglicht dem Benutzer, die Dichtmittelkapsel durch Ziehen am Zugdraht zu öffnen, damit die Dichtflüssigkeit freigegeben wird.

Ferner kann die Dichtmittelkapsel einen Ventilabschnitt umfassen, über den die Dichtmittelkapsel mit einem Zweiradventil verbindbar ist. Vorzugsweise umfasst die Dichtmittelkapsel in diesem Fall den elastischen Abschnitt. Der Ventilabschnitt ist bevorzugt mit einer Rückschlagklappe ausgebildet, die ein Einströmen von Luft in den Innenraum der Dichtmittelkapsel zulässt, aber ein Ausströmen der Dichtflüssigkeit aus der Dichtmittelkapsel verhindert. Die Dichtmittelkapsel ist mittels des Ventilabschnitts am Radventil anbringbar. Alternativ ist es denkbar, dass der Ventilabschnitt und optional die Dichtmittelkapsel einstückig mit dem Radventil ausgebildet ist. In diesem Fall kann die mit der Dichtflüssigkeit gefüllte Dichtmittelkapsel samt dem Ventilabschnitt und optional samt der Rückschlagklappe zusammen mit dem Ventilkörper in einem Ventilloch der Felge fixiert werden. Um die Dichtmittelkapsel zu öffnen, wird also Luft durch das Ventil und den Ventilabschnitt der Dichtmittelkapsel in die Dichtmittelkapsel eingepumpt. Falls die Hülle der Dichtmittelkapsel den elastischen Abschnitt aufweist, wird dieser durch das Druckbeaufschlagen elastisch deformiert, bis er reißt oder vom Ventil abgleitet. Falls die Hülle starr ist, kann vorgesehen sein, dass die Dichtmittelkapsel lösbar, z.B. gleitend lösbar, über den Ventilabschnitt am Ventil befestigt ist und sich infolge der Druckbeaufschlagung als Ganzes vom Ventil ablöst. In beiden Fällen kann die Dichtflüssigkeit durch die entsprechend freigelegte Öffnung aus der Dichtmittelkapsel ausfließen.

Als Radventil kommt bevorzugt ein Zweiwegeventil in Frage, mittels dessen Luft beim Druckbeaufschlagen des Reifens selektiv entweder direkt dem Innenbereich des Reifens oder der Dichtmittelkapsel zugeführt werden kann. Das Zweiwegeventil ist insofern dazu eingerichtet, die in den Reifen eingepumpte Luft je nach Wunsch in den Innenbereich des Reifens, d.h. in die Umgebung der Dichtmittelkapsel, oder in den Innenraum der Dichtmittelkapsel zu leiten. Da derartige Zweiwegeventile dem Fachmann hinlänglich bekannt sind, wird hier nicht näher auf sie eingegangen.

Bei der Dichtflüssigkeit kann es sich insbesondere um eine aus dem Stand der Technik bekannte Latex-haltige Flüssigkeit handeln. Beispielsweise kommt als Dichtflüssigkeit das unter den Handelsnamen "Schwalbe Blue Doc" der Firma Ralf Bohle GmbH in Frage. Zumindest ein Abschnitt der Hülle ist vorzugsweise als Folie ausgebildet. Als Materialien der Hülle kommen insbesondere Latex oder Polymere, wie zum Beispiel Polyethylen, Polyethylenglycol, Polypropylen, Polyvinylalkohol, Polyvinylaldehyd oder Polyvinylchlorid, in Frage. Ferner kann ein Abschnitt der Hülle aus einem Wachs, beispielsweise Paraffin und/der Stearin, und/oder aus einem Gummi gebildet sein. Der Gummi-Abschnitt erlaubt, die Dichtmittelkapsel bei Bedarf wiederzuverwerten, indem die Dichtmittelkapsel, z.B. mittels einer Spritze und einer Kanüle, wieder mit Dichtflüssigkeit befüllt wird.

Wenn die Hülle beispielsweise einen Gummi-Abschnitt und einen porösen Abschnitt aufweist, kann die Dichtmittelkapsel wie folgt verwendet werden: Die Kapsel wird in den Reifen eingelegt und der Reifen wird anschließend auf den gewünschten Reifendruck, z.B. 1,8 bar, aufgepumpt. Da die Dichtflüssigkeit unmittelbar nach dem Aufpumpen im Innenraum der Dichtmittelkapsel von der Hülle eingeschlossen ist, kann die Kontaktfläche zwischen den Reifenwülsten und dem Felgenhorn in diesem Zustand nicht abgedichtet werden. Die Luft entweicht somit langsam, in mehreren / bis zu 15 Minuten, aus dem Reifen. In dieser Zeitspanne ist das Rad mit einer vorbestimmten Drehzahl zu fahren oder zumindest zu drehen, sodass die Dichtflüssigkeit durch die Poren aus der Dichtmittelkapsel austritt, um an die Kontaktfläche zu fließen und den Reifen gegenüber der Felge abzudichten. Im Fall eines Reifenschadens, in dem der Reifen von der Felge demontiert werden muss, kann die Dichtmittelkapsel entnommen und Dichtflüssigkeit mittels Spritze und Kanüle durch Injektion durch den Gummi-Abschnitt in den Innenraum der Dichtmittelkapsel eingefüllt werden. Nach Herausziehen der Kanüle aus dem Gummi-Abschnitt kontrahiert sich das eingebrachte Loch bei Atmosphärendruck. Die vorstehend beschriebene Montage kann somit wiederholt werden.

Darüber hinaus kann vorgesehen sein, dass das Hüllenmaterial vor Einbringung in den Innenbereich des Reifens vorgespannt ist. Auf einfache Art und Weise kann die Vorspannung durch einen im Inneren der Dichtmittelkapsel herrschenden statischen (Luft-) Druck realisiert werden, der größer (Überdruck) oder kleiner (Unterdruck) ist als der Atmosphärendruck. Falls die Hülle beispielsweise den elastischen, aber keinen starren Abschnitt aufweist, ist der elastische Abschnitt vorzugsweise vorgedehnt, sodass die zum Erreichen der Zerreißgrenze erforderliche weitere Kompression selbst bei erhöhtem Umgebungsdruck in der Umgebung der Dichtmittelkapsel relativ gering ist. Dadurch kann die Dichtmittelkapsel leichter zum Reißen gebracht werden. Falls die Hülle hingegen sowohl einen elastischen, als auch einen starren Abschnitt aufweist, ist es denkbar, dass der elastische Abschnitt der Hülle in seinem vorgespannten Zustand eine von dem starren Abschnitt umrandete Öffnung in der Hülle verschließt. Das Öffnen der Hülle kann in diesem Fall beispielsweise durch Druckbeaufschlagen des Reifens herbeigeführt werden.

Eine schlauchlose Radbaugruppe für ein Zweirad ist insbesondere für ein Fahrrad vorgesehen und umfasst eine vorstehend ausführlich beschriebene Dichtmittelkapsel sowie einen schlauchlosen Reifen mit einem Laufflächenabschnitt und zwei seitlich des Laufflächenabschnitts angeordneten Reifenwülsten, die dazu ausgebildet sind, im auf der Felge montierten Zustand des Reifens jeweils an einem Felgenhorn einer Zweiradfelge anzuliegen. Vorzugsweise ist die Dichtmittelkapsel mittels der Halteeinrichtung an einer Innenseite des schlauchlosen Reifens angebracht. Die schlauchlose Radbaugruppe kann als Bausatz bereitgestellt werden. Die schlauchlose Radbaugruppe umfasst keinen Schlauch, sodass im montierten und/oder bestimmungsgemäßen Zustand des Reifens kein Schlauch im Innenbereich des Rades zwischen der Lauffläche des Reifens und der Felge angeordnet ist.

Ein Verfahren zur Montage eines schlauchlosen Reifens für ein Zweirad, der zwei seitlich eines Laufflächenabschnitts angeordnete Reifenwülste umfasst, die zur Anlage an jeweils ein Felgenhorn einer Zweiradfelge für einen schlauchlosen Reifen ausgebildet sind, umfasst die Schritte: Einlegen oder Einbringen einer vorstehend beschrieben Dichtmittelkapsel in den Innenbereich des schlauchlosen Reifens, Aufziehen des Reifens mit der sich im Innenbereich des Reifens befindenden Dichtmittelkapsel auf die Felge, Druckbeaufschlagen des Innenbereichs des Reifens durch ein mit einem Ventilloch der Felge in Eingriff stehenden Ventil, Öffnen der sich im Innenbereich des Reifens befindenden Hülle der Dichtmittelkapsel, um zumindest einen Teil der Dichtflüssigkeit in die Umgebung der Dichtmittelkapsel im Innenbereich des Reifens freizugeben, und Einfließen lassen zumindest eines Teils der Dichtflüssigkeit in einen Bereich des Zwischenraums / der Kontaktfläche zwischen jedem Reifenwulst und dem zugehörigen Felgenhorn mittels einer auf den Teil der Dichtflüssigkeit einwirkenden Kraft, damit der Teil der Dichtflüssigkeit dort erstarrt. In den Reifen wird kein Schlauch eingebracht. Bevorzugt wird der Reifen nach dem Einbringen der Dichtmittelkapsel in den Innenbereich des Reifens schlauchlos auf der Felge montiert.

Die Erfindung wird nachfolgend anhand der beigefügten schematischen Zeichnungen am Beispiel einer Dichtmittelkapsel einer Radbaugruppe weiter erläutert. Einzelmerkmale der dargestellten und/oder beschriebenen Ausführungsformen lassen sich in beliebiger Weise kombinieren, ohne den Rahmen der Erfindung zu überschreiten, und zwar auch ohne weitere Merkmale, mit denen sie im Zusammenhang gezeigt oder beschrieben sind. Es stellen dar:
- Figur 1: eine Querschnittsansicht einer Radbaugruppe mit einer Dichtmittelkapsel, wobei die Radachse in der Schnittebene verläuft;
- Figur 2: eine Querschnittsansicht einer Radbaugruppe mit einer Alternativen Dichtmittelkapsel, wobei die Radachse in der Schnittebene verläuft;
- Figur 3: eine Querschnittsansicht einer Radbaugruppe mit einer weiteren Alternativen Dichtmittelkapsel, wobei die Radachse in der Schnittebene verläuft;
- Figur 4: eine Querschnittsansicht einer Radbaugruppe mit einer weiteren Alternativen Dichtmittelkapsel, wobei die Radachse in der Schnittebene verläuft;
- Figur 5: eine Querschnittsansicht einer Radbaugruppe mit einer weiteren Alternativen Dichtmittelkapsel, wobei die Radachse in der Schnittebene verläuft;
- Figur 6: eine Querschnittsansicht einer Radbaugruppe mit einer weiteren Alternativen Dichtmittelkapsel, wobei die Radachse in der Schnittebene verläuft;
- Figur 7: eine Querschnittsansicht einer Radbaugruppe mit einer weiteren Alternativen Dichtmittelkapsel, wobei die Radachse in der Schnittebene verläuft;
- Figur 8: eine Querschnittsansicht einer Radbaugruppe mit einer weiteren Alternativen Dichtmittelkapsel, wobei die Radachse in der Schnittebene verläuft.

In den Figuren ist zu erkennen, dass keine der Radbaugruppen einen Schlauch umfasst. Im Innenbereich des Reifens ist also kein Schlauch angeordnet.

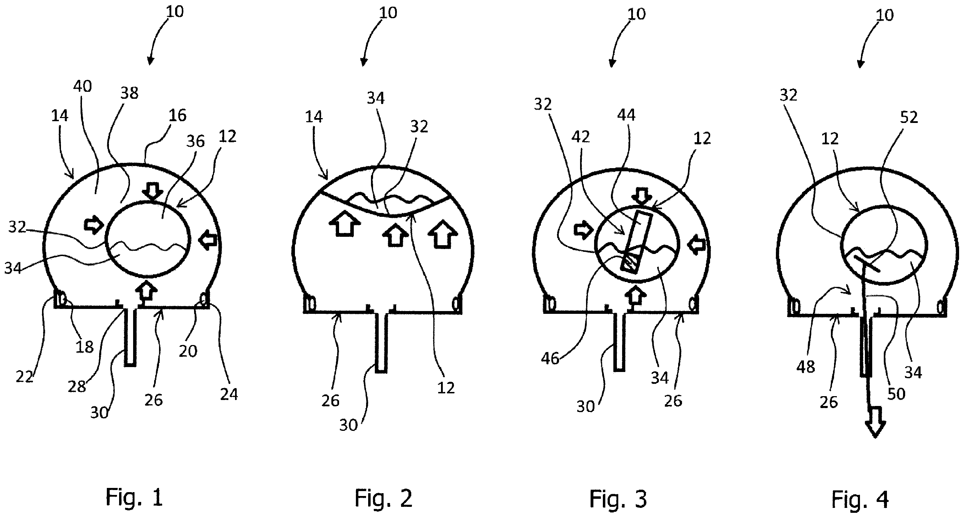

Figur 1 zeigt eine schlauchlose Radbaugruppe 10 für ein Zweirad mit einer Dichtmittelkapsel 12 sowie einem schlauchlosen Reifen 14 mit einem Laufflächenabschnitt 16 und zwei Reifenwülsten 18, 20 im auf der Felge montierten Zustand des schlauchlosen Reifens 14. Im vorliegenden Fall handelt es sich bei dem Zweirad um ein Fahrrad. Reifenwülste 18, 20 sind jeweils seitlich des Laufflächenabschnitts 16 angeordnet und liegen an jeweils einem Felgenhorn 22, 24 der Felge 26 an. In der Felge 26 ist eine Ventilöffnung 28 ausgebildet, die von einem Ventil 30 durchsetzt ist.

Die Dichtmittelkapsel 12 umfasst eine Hülle 32, die einen teilweise mit einer Dichtflüssigkeit 34 gefüllten Innenraum 36 zumindest bei in der Umgebung der Dichtmittelkapsel 12 herrschendem Atmosphärendruck gegenüber ihrer Umgebung 38 abdichtet. Der Rest des Innenraums 36 ist mit Luft gefüllt. Im in Figur 1 gezeigten montierten Zustand befindet sich die Dichtmittelkapsel 12 im Innenbereich 40 des Reifens 14, der im in Figur 1 gezeigten Zustand durch die Felge 26 und den schlauchlosen Reifen 14 begrenzt ist. Da es sich bei dem Reifen 14 um einen schlauchlosen Reifen handelt, ist dieser Innenbereich 40 frei von einem Fahrradschlauch. Zur Abdichtung von hier nicht dargestellten Speichenlöchern kann optional ein flexibles Felgenband (nicht gezeigt) auf einer dem Reifen 14 zugewandten Oberfläche der Felge 26 vorgesehen sein. Das Volumen des Innenraums der Dichtmittelkapsel 12 beträgt in diesem Ausführungsbeispiel 60 ml, kann jedoch auch andere Werte annehmen.

Die Hülle 32 besteht aus einem elastischen Material mit einer Schmelztemperatur, die geringer als die Schmelztemperatur des Materials des Reifens 14 ist. In diesem Beispiel ist die Hülle 32 aus einer Polymerfolie hergestellt. Gleichwohl kommen andere Materialien für die Verwendung als Hülle in Frage.

Um die Dichtmittelkapsel 12 zu öffnen, kann der Benutzer beispielsweise im nichtdruckbeaufschlagen Zustand der Dichtmittelkapsel 12 das Rad fest auf den Boden aufdrücken, sodass die Dichtmittelkapsel 12 zwischen der Felge 26 und der Innenoberfläche des Reifens 14 infolge der Deformation des Reifens 14 zusammengedrückt wird. Hierdurch wird die Dichtflüssigkeit 34 sowie die im Innenraum 36 der Dichtmittelkapsel 12 befindliche Luft in Umfangsrichtung des Reifens 14 (senkrecht zur Zeichenebene) verdrängt, wodurch die Hülle in ebendiese Richtung gestreckt wird. Nach Überwinden der Zerreißgrenze des elastischen Materials öffnet sich / reißt die Hülle 32, und die Dichtflüssigkeit 34 tritt aus der Dichtmittelkapsel 12 in den Innenbereich 40 aus. Vorzugsweise sollte dabei das Ventil 30 nicht am vertikal unteren Ende des Rades in Bodennähe positioniert sein, um ein Eintreten der Dichtflüssigkeit 34 in das Ventil 30 zu vermeiden.

Eine in Figur 2 gezeigte Alternative einer Dichtmittelkapsel 12 unterscheidet sich von der Dichtmittelkapsel 12 aus Figur 1 lediglich dadurch, dass ihre Hülle 32 aus einem elastischen, porösen Material hergestellt ist. Jede der Poren (nicht gezeigt) ist so ausgestaltet, dass sie zumindest bei Stillstand der Dichtmittelkapsel 12 und bei Atmosphärendruck in der Umgebung 38 der Dichtmittelkapsel 12 für die Dichtflüssigkeit im Wesentlichen verschlossen und bei Erhöhung des bezüglich der Hülle 32 innenseitigen Druckes im Bereich der Poren für die Dichtflüssigkeit Durchlässig ist.

Zum Öffnen dieser Dichtmittelkapsel 12 kommen die vorstehend in Zusammenhang mit Figur 1 beschriebenen Wirkmechanismen ebenfalls in Frage, wobei jedoch keine Überschreitung der Zerreißgrenze des Hüllenmaterials erforderlich ist. Alternativ kann die Dichtmittelkapsel 12 dadurch geöffnet werden, dass der Reifen zunächst aufgepumpt wird und sich das Rad anschließend, beispielsweise nach Montage auf dem Fahrrad während der Fahrt, mit einer vorbestimmten Rotationsgeschwindigkeit um seine Achse dreht. In diesem Fall wird die Dichtmittelkapsel 12 samt der Dichtflüssigkeit fliehkraftbedingt gegen den Laufflächenabschnitt 16 gedrückt, wodurch die vorgenannte Streckung der Hülle bewirkt wird, und die Dichtflüssigkeit 34 tritt in den Innenbereich 40 aus. Die (im Wesentlichen inkompressible) Dichtflüssigkeit 34 kann dabei direkt durch die Poren austreten, wenn das Hüllenmaterial infolge der Rotation des Rades mit einer vorbestimmten Rotationsgeschwindigkeit gegen die Innenumfangsfläche des Reifens 14 gepresst wird.

Darüber hinaus weist die Radbaugruppe 10 mit der alternativen Dichtmittelkapsel 12 aus Figur 2 alle Merkmale der Radbaugruppe 10 aus Figur 1 auf.

Eine in Figur 3 gezeigte weitere Alternative einer Dichtmittelkapsel 12 unterscheidet sich von der Dichtmittelkapsel 12 aus Figur 1 dadurch, dass in ihrem Inneren ein starrer Körper 42 angeordnet ist, der steifer ist als die Hülle 32. Insbesondere sind die Wände des starren Körpers 42 aus einem Material hergestellt, das eine höhere Steifigkeit aufweist als das Material der Hülle 32. Der starre Körper ist hier beispielhaft als Schwimmer ausgestaltet, d.h. er weist einen ersten Abschnitt 44 mit einer ersten Dichte und einen zweiten Abschnitt 46 mit einer zweiten Dichte auf, wobei die zweite Dichte jeweils größer ist als die Dichte des ersten Abschnitts 44 und als die Dichte der Dichtflüssigkeit 34. Damit richtet sich der starre Körper 42 in seiner Ruheposition stets senkrecht zur Oberfläche der Dichtflüssigkeit 34 aus.

Durch das Aufpumpen des Reifens 14 wird der (Luft-) Druck in der Umgebung 38 erhöht und die Dichtmittelkapsel 12 in Richtung der in Figur 3 dargestellten Blockpfeile komprimiert. Sobald der starre Körper 42 an zwei einander entgegengesetzten Oberflächen mit der Hülle 32 in Kontakt gelangt, können an den entgegengesetzten Oberflächen ausgebildete Trennmittel (zum Beispiel Spitzen) Löcher in die Hülle 32 einbringen, durch die die Dichtflüssigkeit 34 aus der Dichtmittelkapsel 12 austreten kann.

Darüber hinaus weist die Radbaugruppe 10 mit der alternativen Dichtmittelkapsel 12 aus Figur 3 alle Merkmale der Radbaugruppe 10 aus Figur 1 auf.

Eine in Figur 4 gezeigte weitere Alternative einer Dichtmittelkapsel 12 unterscheidet sich von der Dichtmittelkapsel 12 aus Figur 1 dadurch, dass sie einen mit der Hülle 12 in Verbindung stehenden Zugdraht 48 aufweist. Der Zugdraht 48 umfasst einen länglichen Abschnitt 50 und einen im Inneren der Dichtmittelkapsel 12 quer zum (drahtförmigen) länglichen Abschnitt 50 angeordneten, mit diesem verbundenen Endabschnitt 52. Der längliche Abschnitt 50 durchsetzt die Hülle 32 der Dichtmittelkapsel 12 und ist ihr gegenüber abgedichtet, sodass an der Verbindungsstelle zwischen dem länglichen Abschnitt 50 und der Hülle 32 weder Luft 36 noch Dichtflüssigkeit 34 aus der Dichtmittelkapsel 12 austreten kann. Darüber hinaus durchsetzt der längliche Abschnitt 50 das in der Felge 26 ausgebildete Ventilloch 28 sowie das Ventil 30 vollständig und erstreckt sich am der Felge 26 entgegengesetzten Ende des Ventils 30 aus diesem heraus, um vom Benutzer in Richtung des in Figur 4 dargestellten Blockpfeils gezogen werden zu können.

In diesem Beispiel ist der Endabschnitt 52 ebenfalls drahtförmig ausgestaltet und weist quer zu seiner Erstreckungsrichtung im Wesentlichen den gleichen Querschnitt auf wie der längliche Abschnitt 50. Der Endabschnitt 52 kann allerdings auch eine andere Form aufweisen, beispielsweise als Plättchen ausgestaltet sein. Der gesamte Zugdraht 48 ist einstückig aus einem Kunststoff hergestellt.

Durch Ziehen des Zugdrahtes 48 aus dem Innenbereich des Reifens 14 und damit eingehendem Entfernen des Zugdrahtes 48 von / aus der Dichtmittelkapsel 12 kann bei Eintreten oder Durchtreten des Endabschnitts 52 in / durch die Hülle ein Loch in die Hülle 32 der Dichtmittelkapsel 12 eingebracht werden, wodurch die Dichtmittelkapsel 12 geöffnet wird. In einer Alternative ist der Endabschnitt 52 an der Hülle 32, innen- oder außenseitig, befestigt, beispielsweise über eine Klebeverbindung. Wenn der Endabschnitt 52 außenseitig an der Hülle 32 festgeklebt ist, ist die Klebeverbindung zwischen Endabschnitt 52 und Hüllenmaterial vorzugsweise fester als das Hüllenmaterial selbst, sodass beim Herausziehen des Zugdrahtes 48 ein Teil der Hülle herausgerissen wird, um die Hülle 32 zu öffnen.

Darüber hinaus weist die Radbaugruppe 10 mit der alternativen Dichtmittelkapsel 12 aus Figur 4 alle Merkmale der Radbaugruppe 10 aus Figur 1 auf.

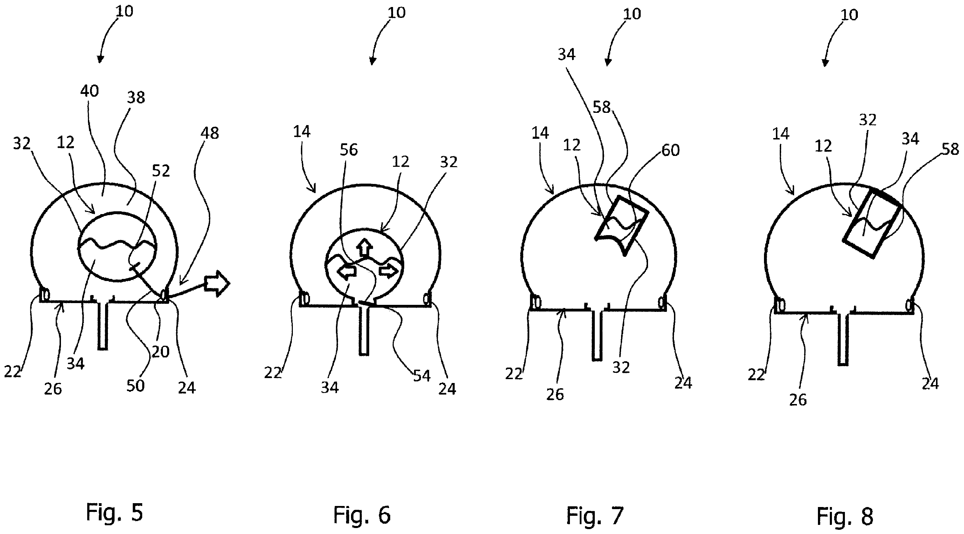

Eine in Figur 5 gezeigte weitere Alternative einer Dichtmittelkapsel 12 unterscheidet sich von der Dichtmittelkapsel 12 aus Figur 4 dadurch, dass sich der Zugdraht 48 nicht durch das Ventil erstreckt, sondern über die Kontaktfläche zwischen dem Reifenwulst 20 und dem Felgenhorn 24 geführt ist. Alternativ ist es denkbar, dass der Zugdraht 48 durch Löcher im Reifenwulst 20 und im Felgenhorn 24 geführt ist.

Darüber hinaus weist die Radbaugruppe 10 mit der alternativen Dichtmittelkapsel 12 aus Figur 5 alle Merkmale der Radbaugruppe 10 aus Figur 4 auf.

Eine in Figur 6 gezeigte weitere Alternative einer Dichtmittelkapsel 12 unterscheidet sich von der Dichtmittelkapsel 12 aus Figur 1 dadurch, dass die alternative Dichtmittelkapsel 12 aus Figur 6 einen Ventilabschnitt 54 aufweist, der einen Teil der Hülle 32 bildet. Der Ventilabschnitt 54 weist eine Rückschlagventilklappe 56 auf, die ein Ausfließen der Dichtflüssigkeit 34 aus der Dichtmittelkapsel verhindert, wenn der Druck in der Dichtmittelkapsel 12 größer ist als der Druck in der Umgebung 38. Die Rückschlagventilklappe 56 erlaubt jedoch, Luft über das Ventil 30 und den Ventilabschnitt 54 in die Dichtmittelkapsel 12 einzupumpen, um die Dichtmittelkapsel 12 bei Erreichen eines vorbestimmten Luftdruckes zu öffnen, beispielsweise indem das Hüllenmaterial reißt. Das Ventil 30 kann beispielsweise als Zweiwegeventil ausgebildet sein, mittels dessen Luft je nach Einstellung seiner Luftleitungsmittel (selektiv) direkt dem Innenbereich des Reifens und/oder der Dichtmittelkapsel zugeführt werden kann.

Darüber hinaus weist die Radbaugruppe 10 mit der alternativen Dichtmittelkapsel 12 aus Figur 6 alle Merkmale der Radbaugruppe 10 aus Figur 1 auf.

Eine in Figur 7 gezeigte weitere Alternative einer Dichtmittelkapsel 12 unterscheidet sich von der Dichtmittelkapsel 12 aus Figur 1 dadurch, dass ihre Dichtmittelkapsel 12 einen starren Abschnitt 58 und einen elastischen Abschnitt 60 aufweist. Der Luftdruck im Innenraum 36 beträgt vorzugsweise weniger als 0,9 bar. Dadurch ist der elastische Abschnitt 60 bereits bei Atmosphärendruck einwärts bezüglich der Dichtmittelkapsel 12 vorgespannt. Durch das Aufpumpen des Reifens 14 wird der elastische Abschnitt 60 weiter in den Innenraum 36 hineingedrückt. Bei Erreichen der Zeirreißgrenze des elastischen Materials 60 öffnet sich die Dichtmittelkapsel 12 und die Dichtflüssigkeit 34 kann aus der Dichtmittelkapsel 12 austreten. Das Material des starren Abschnitts 58 ist brüchig und kann durch Zusammendrücken zwischen dem Reifen 14 und der Felge 26 in Einzelteile zerbrochen werden, die dazu geformt sind, dass sie zusammen mit Dichtflüssigkeit ein oder mehrere Löcher im Reifen 14 ab dichten können. Die Einzelteile können hierzu beispielsweise bis zu 10 mm lang und jeweils bis zu 4 mm breit und hoch sein. In einer alternativen Ausführungsform sind die Einzelteile hierfür in etwa von der Größe eines Reiskorns. Um auf diese Weise zu zerbrechen, kann das Material eine Vielzahl Sollbruchstellen aufweisen. Zusammen mit der Dichtflüssigkeit können die Einzelteile vergleichsweise große Löcher im Reifen verschließen.

Darüber hinaus weist die Radbaugruppe 10 mit der alternativen Dichtmittelkapsel 12 aus Figur 7 alle Merkmale der Radbaugruppe 10 aus Figur 1 auf.

Schließlich unterscheidet sich eine in Figur 8 gezeigte weitere Alternative einer Dichtmittelkapsel 12 von der Dichtmittelkapsel 12 aus Figur 7 dadurch, dass sie keinen elastischen Abschnitt 60 aufweist, sondern ihre Hülle 32 vollständig aus einem starren Material gebildet ist. Die Dichtmittelkapsel 12 ist über eine Klebeverbindung, welche eine Halteeinrichtung darstellt, zur vereinfachten Montage innenseitig am Reifen festgeklebt. Alternativ kann die Dichtmittelkapsel 12 entsprechend an einer dem Reifen 14 zugewandten Oberfläche der Felge 26 befestigt sein. Außerdem weist die Hülle 32 eine Sollbruchstelle (nicht dargestellt) auf, die nach Erreichen eines vorbestimmten Umgebungsdruckes in der Umgebung der Dichtmittelkapsel 12, beispielsweise infolge des Aufpumpens des Reifens, bricht. Durch die dadurch entstehende Öffnung kann die Dichtflüssigkeit aus der Dichtmittelkapsel 12 austreten.

Darüber hinaus weist die Radbaugruppe 10 mit der alternativen Dichtmittelkapsel 12 aus Figur 8 alle Merkmale der Radbaugruppe 10 aus Figur 7 auf.

In jedem der vorstehend beschriebenen Ausführungsbeispiele ist in der Dichtmittelkapsel 12 so viel Dichtflüssigkeit angeordnet, wie für die Abdichtung eines schlauchlosen Reifens 14 gegenüber der Felge 26 benötigt wird. Die Dichtflüssigkeit 34 kann nach dem Öffnen der Dichtmittelkapsel 12 aus dieser austreten und zu den Kontaktflächen zwischen den Reifenwülsten 18, 20 und den Felgenhörnern 22, 24 fließen, um nach Erstarren den Reifen gegenüber der Felge abzudichten.

## Patentansprüche

1. Dichtmittelkapsel (12) für die Montage eines schlauchlosen Reifens (14) für ein Zweirad, der zwei seitlich eines Laufflächenabschnitts angeordnete Reifenwülste (18, 20) umfasst, die zur Anlage an jeweils ein Felgenhorn (22, 24) einer Zweiradfelge (26) für einen schlauchlosen Reifen ausgebildet sind, wobei die Dichtmittelkapsel (12) eine Hülle (32) aufweist, die einen zumindest teilweise mit einer Dichtflüssigkeit (34) gefüllten Innenraum der Dichtmittelkapsel (12) zumindest bei in einer Umgebung (38) der Dichtmittelkapsel (12) herrschendem Atmosphärendruck gegenüber der Umgebung (38) abdichtet, wobei die Dichtmittelkapsel (12) in einen im montierten Zustand des schlauchlosen Reifens (14) auf der Felge (26) durch den schlauchlosen Reifen und die Felge (26) begrenzten Innenbereich des schlauchlosen Reifens (14) einbringbar ist, um infolge eines Öffnens der Hülle (32) im montierten Zustand des schlauchlosen Reifens (14) zumindest einen Teil der Dichtflüssigkeit (34) in die Umgebung der Dichtmittelkapsel (12) im Innenbereich des schlauchlosen Reifens (14) freizugeben, **dadurch gekennzeichnet, dass** die Hülle (32) zumindest einen starren Abschnitt (58) mit einer Sollbruchstelle aufweist.

2. Dichtmittelkapsel (12) nach Anspruch 1, wobei zumindest ein Teil der Dichtflüssigkeit (34) dazu geeignet ist, zumindest im auf der Felge (26) montierten und druckbeaufschlagten Zustand des schlauchlosen Reifens (14) zum Abdichten des schlauchlosen Reifens (14) gegenüber der Felge (26) bedingt durch eine auf den Teil der Dichtflüssigkeit (34) einwirkende Kraft in einen Bereich eines Zwischenraums zwischen jedem Reifenwulst und dem zugehörigen Felgenhorn (22, 24) zu fließen und dort zu erstarren.

3. Dichtmittelkapsel (12) nach einem der vorangehenden Ansprüche, wobei die Hülle (32) zumindest abschnittsweise aus einem elastischen Material hergestellt ist.

4. Dichtmittelkapsel (12) nach einem der vorangehenden Ansprüche, wobei die Hülle (32) zumindest abschnittsweise aus einem porösen Material hergestellt ist, wobei jede der Poren zumindest bei Stillstand der Dichtmittelkapsel (12) und bei Atmosphärendruck in der Umgebung der Dichtmittelkapsel (12) für die Dichtflüssigkeit (34) im Wesentlichen verschlossen und bei Erhöhung des bezüglich der Hülle (32) innenseitigen Druckes im Bereich der Pore für die Dichtflüssigkeit (34) durchlässig ist.

5. Dichtmittelkapsel (12) nach einem der vorangehenden Ansprüche, wobei im Innenraum der Dichtmittelkapsel (12) zumindest ein starrer Körper angeordnet ist, der eine höhere Steifigkeit aufweist als die Hülle (32).

6. Dichtmittelkapsel (12) nach einem der vorangehenden Ansprüche, wobei die Hülle (32) zumindest einen starren Abschnitt (58) aufweist, der dazu eingerichtet ist, infolge einer durch eine äußere Kraft bewirkten Kompression der Hülle (32), insbesondere zwischen dem Reifen und der Felge (26), zumindest teilweise in reiskorngroße Einzelteile zu zerbrechen.

7. Dichtmittelkapsel (12) nach einem der vorangehenden Ansprüche, ferner umfassend einen mit der Hülle (32) in Verbindung stehenden Zugdraht (48), der dazu eingerichtet ist, infolge einer Relativbewegung zwischen dem Zugdraht (48) und einem an den Zugdraht (48) angrenzenden Abschnitt der Hülle (32), die Hülle (32) für das Freigeben der Dichtflüssigkeit (34) zu öffnen.

8. Dichtmittelkapsel (12) nach einem der vorangehenden Ansprüche, ferner umfassend einen Ventilabschnitt (54) zur Verbindung mit einem Zweiradventil, wobei der Ventilabschnitt (54) als Rückschlagventil ausgebildet ist, der dazu eingerichtet ist, ein Ausfließen der Dichtflüssigkeit (34) durch den Ventilabschnitt (54) zu verhindern und ein Einströmen durch den Ventilabschnitt (54) zuzulassen.

9. Schlauchlose Radbaugruppe für ein Zweirad, insbesondere für ein Fahrrad, umfassend eine Dichtmittelkapsel (12) nach einem der vorangehenden Ansprüche, und einen schlauchlosen Reifen mit einem Laufflächenabschnitt und zwei Reifenwülsten (18, 20), die dazu ausgebildet sind, im auf der Felge (26) montierten Zustand des schlauchlosen Reifens (14) jeweils an einem Felgenhorn (22, 24) einer Zweiradfelge anzuliegen.

10. Schlauchlose Radbaugruppe nach Anspruch 9, wobei die Dichtmittelkapsel (12) mittels einer Halteeinrichtung an einer Innenseite des schlauchlosen Reifens (14) angebracht ist.

11. Schlauchlose Radbaugruppe nach Anspruch 9 oder 10, wobei die Hülle (32) zumindest abschnittsweise aus einem Material hergestellt ist, das eine Schmelztemperatur aufweist, die geringer ist als die Schmelztemperatur des Reifenmaterials.

12. Schlauchlose Radbaugruppe nach Anspruch 9 umfassend eine Dichtmittelkapsel nach Anspruch 8 und ein Zweiradventil, wobei das Zweiradventil als Zweiwegeventil ausgebildet ist, das zum selektiven Leiten von Luft in den Innenbereich des Reifens und/oder in den Innenraum der Dichtmittelkapsel eingerichtet ist.

13. Verfahren zur Montage einer schlauchlosen Radbaugruppe für ein Zweirad, umfassend eine Dichtmittelkapsel und einen schlauchlosen Reifen, wobei die Dichtmittelkapsel (12) eine Hülle (32) aufweist, die einen zumindest teilweise mit einer Dichtflüssigkeit gefüllten Innenraum der Dichtmittelkapsel (12) zumindest bei in einer Umgebung (38) der Dichtmittelkapsel (12) herrschenden Atmosphärendruck gegenüber der Umgebung (38) abdichtet, wobei die Dichtmittelkapsel (12) in einen im montierten Zustand des schlauchlosen Reifens (14) auf der Felge (26) durch den schlauchlosen Reifen und die Felge (26) begrenzten Innenbereich des schlauchlosen Reifens (14) einbringbar ist, um infolge eines Öffnens der Hülle (32) im montierten Zustand des schlauchlosen Reifens (14) zumindest einen Teil der Dichtflüssigkeit (34) in die Umgebung der Dichtmittelkapsel (12) im Innenbereich des schlauchlosen Reifens (14) freizugeben, wobei der schlauchlose Reifen zwei seitlich eines Laufflächenabschnitts angeordnete Reifenwülste umfasst, die zur Anlage an jeweils ein Felgenhorn (22, 24) einer Zweiradfelge (26) für einen schlauchlosen Reifen ausgebildet sind, umfassend die Schritte Einlegen der Dichtmittelkapsel (12) in den Innenbereich des schlauchlosen Reifens (14), Aufziehen des schlauchlosen Reifens (14) mit der sich im Innenbereich des Reifens (14) befindenden Dichtmittelkapsel (12) auf die Felge (26), Druckbeaufschlagen des Innenbereichs des schlauchlosen Reifens (14) durch ein mit einem Ventilloch der Felge (26) in Eingriff stehendes Ventil, **gekennzeichnet durch** Öffnen der sich im Innenbereich des schlauchlosen, druckbeaufschlagten Reifens (14) befindenden Hülle (32) der Dichtmittelkapsel (12), um zumindest einen Teil der Dichtflüssigkeit (34) in die Umgebung der Dichtmittelkapsel (12) im Innenbereich des schlauchlosen Reifens (14) freizugeben.

14. Verfahren nach Anspruch 13, umfassend das Einfließen lassen zumindest eines Teils der Dichtflüssigkeit (34) in einen Bereich des Zwischenraums zwischen jedem Reifenwulst und dem zugehörigen Felgenhorn (22, 24) mittels einer auf den Teil der Dichtflüssigkeit (34) einwirkenden Kraft, damit der Teil der Dichtflüssigkeit (34) dort erstarrt.

## Claims

1. Sealant capsule (12) for fitting of a tubeless tyre (14) for a two-wheeled vehicle, which tyre comprises, disposed laterally to a tread surface section, two tyre beads (18, 20) which are configured for abutment on a respective rim flange (22, 24) of a two-wheeled vehicle rim (26) for a tubeless tyre; wherein the sealant capsule (12) has a shell (32) which seals an interior space of the sealant capsule (12) which is at least partially filled with a sealing liquid (34), at least with atmospheric pressure present in an environment (38) of the sealant capsule (12), against the environment (38); wherein the sealant capsule (12) is adapted to be placed into an interior zone of the tubeless tyre (14), which zone is delimited by the tubeless tyre and the rim (26), in the condition of the tubeless tyre (14) fitted on the rim (26), in order to release at least a part of the sealing liquid (34) to the environment of the sealant capsule (12) in the interior zone of the tubeless tyre (14) as a result of opening the shell (32) in the fitted condition of the tubeless tyre (14), **characterized in that** the shell (32) includes at least one rigid section (58) with a predetermined breaking point.

2. Sealant capsule (12) according to claim 1, wherein at least a part of the sealing liquid (34) is suitable, at least with the tubeless tyre (14) fitted on the rim (26) and in a pressurized condition, to flow into a zone of an intermediate space between each tyre bead and the associated rim flange (22, 24) and to solidify there, for sealing the tubeless tyre (14) in relation to the rim (26) as a result of a force acting on the part of the sealing liquid (34).

3. Sealant capsule (12) according to any of the preceding claims, wherein the shell (32) is composed at least in sections from an elastic material.

4. Sealant capsule (12) according to any of the preceding claims, wherein the shell (32) is composed at least in sections from a porous material, wherein each of the pores is essentially closed for the sealing liquid (34), at least during a standstill of the sealant capsule (12) and with atmospheric pressure present in the environment of the sealant capsule (12), and is permeable for the sealing liquid (34) in the vicinity of the pore upon increasing of the internal pressure in relation to the shell (32).

5. Sealant capsule (12) according to any of the preceding claims, wherein in the interior space of the sealant capsule (12) at least one rigid body is disposed which has a rigidity that is superior to that of the shell (32).

6. Sealant capsule (12) according to any of the preceding claims, wherein the shell (32) has at least one rigid section (58) which is configured to split at least partially into separate parts in the size of rice grains, as a result of a compression of the shell (32) caused by an exterior force, in particular between the tyre and the rim (26).

7. Sealant capsule (12) according to any of the preceding claims, further comprising a pull wire (48) in connection with the shell (32), which pull wire is configured to open the shell (32) for releasing of the sealing liquid (34), as a result of a relative movement between the pull wire (48) and a section of the shell (32) adjoining the pull wire (48).

8. Sealant capsule (12) according to any of the preceding claims, further comprising a valve section (54) for connection to a bicycle valve, wherein the valve section (54) is a non-return valve which is configured to prevent flowing out of the sealing liquid (34) through the valve section (54) and to permit flowing in through the valve section (54).

9. Tubeless wheel assembly for a two-wheeled vehicle, in particular a bicycle, comprising a sealant capsule (12) according to any of the preceding claims, and a tubeless tyre having a tread surface section and two tyre beads (18, 20) which are each configured to abut on a respective rim flange (22, 24) of a two-wheeled vehicle rim in the condition of the tubeless tyre (14) fitted on the rim (26).

10. Tubeless wheel assembly according to claim 9, wherein the sealant capsule (12) is attached to an interior side of the tubeless tyre (14) by means of a holding device.

11. Tubeless wheel assembly according to claim 9 or 10, wherein the shell (32) is at least in sections composed of a material presenting a melting temperature that is lower than the melting temperature of the tyre material.

12. Tubeless wheel assembly according to claim 9, comprising a sealant capsule according to claim 8 and a bicycle valve, wherein the bicycle valve is a two-way valve which is arranged for selectively introducing air into the interior space of the tyre and/or into the interior space of the sealant capsule.

13. Method for fitting a tubeless wheel assembly for a two-wheeled vehicle, comprising a sealant capsule and a tubeless tyre, wherein the sealant capsule (12) has a shell (32) which seals an interior space of the sealant capsule (12) which is at least partially filled with a sealing liquid, at least with atmospheric pressure present in an environment (38) of the sealant capsule (12), against the environment (38); wherein the sealant capsule (12) is adapted to be placed into an interior zone of the tubeless tyre (14), which zone is delimited by the tubeless tyre and the rim (26), in the condition of the tubeless tyre (14) fitted on the rim (26), in order to release at least a part of the sealing liquid (34) to the environment of the sealant capsule (12) in the interior zone of the tubeless tyre (14) as a result of opening the shell (32) in the fitted condition of the tubeless tyre (14); wherein the tubeless tyre comprises, disposed laterally to a tread surface section, two tyre beads which are configured for abutment on a respective rim flange (22, 24) of a bicycle rim (26) for a tubeless tyre, comprising the steps of inserting the sealant capsule (12) into the interior zone of the tubeless tyre (14); mounting the tubeless tyre (14) with the sealant capsule (12) located in the interior zone of the tyre (14) onto the rim (26); pressurizing the interior zone of the tubeless tyre (14) through a valve in engagement with a valve hole of the rim (26), **characterized by** opening of the shell (32) of the sealant capsule (12) located in the interior zone of the tubeless, pressurized tyre (14), in order to release at least a part of the sealing liquid (34) to the environment of the sealant capsule (12) in the interior zone of the tubeless tyre (14).

14. Method according to claim 13, comprising: allowing at least a part of the sealing liquid (34) to flow into a zone of the intermediate space between each tyre bead and the associated rim flange (22, 24) by means of a force acting on the part of the sealing liquid (34), in order that the part of the sealing liquid (34) solidifies there.

## Revendications

1. Capsule à agent d'étanchéité (12) pour le montage d'un pneu sans chambre à air (14) pour un deux roues, lequel comprend deux talons de pneu (18, 20) disposés latéralement d'une portion de bande de roulement, lesquels sont configurés pour venir en appui respectivement contre un talon de jante (22, 24) d'une jante de deux roues (26) pour un pneu sans chambre à air, la capsule à agent d'étanchéité (12) possédant une enveloppe (32) qui rend étanche par rapport à un environnement (38) un espace intérieur de la capsule à agent d'étanchéité (12) rempli au moins partiellement d'un liquide d'étanchéité (34) au moins à une pression atmosphérique qui règne dans l'environnement (38) de la capsule à agent d'étanchéité (12), la capsule à agent d'étanchéité (12) pouvant, dans un état monté du pneu sans chambre à air (14) sur la jante (26), être introduite dans une zone intérieure du pneu sans chambre à air (14) délimitée par le pneu sans chambre à air et la jante (26) afin de libérer au moins une partie du liquide d'étanchéité (34) dans l'environnement de la capsule à agent d'étanchéité (12) dans la zone intérieure du pneu sans chambre à air (14) consécutivement à une ouverture de l'enveloppe (32) dans l'état monté du pneu sans chambre à air (14), **caractérisée en ce que** l'enveloppe (32) possède au moins une portion rigide (58) pourvue d'un point de rupture voulu.

2. Capsule à agent d'étanchéité (12) selon la revendication 1, au moins une partie du liquide d'étanchéité (34) étant adaptée pour, au moins dans l'état monté sur la jante (26) et mis sous pression du pneu sans chambre à air (14), en vue de rendre étanche le pneu sans chambre à air (14) par rapport à la jante (26) et du fait d'une force qui agit sur la partie du liquide d'étanchéité (34), s'écouler dans une zone d'un espace intermédiaire entre chaque talon de pneu et le talon de jante (22, 24) associé et s'y solidifier.

3. Capsule à agent d'étanchéité (12) selon l'une des revendications précédentes, l'enveloppe (32) étant, au moins dans certaines portions, fabriquée à partir d'un matériau élastique.

4. Capsule à agent d'étanchéité (12) selon l'une des revendications précédentes, l'enveloppe (32) étant, au moins dans certaines portions, fabriquée à partir d'un matériau poreux, chacun des pores, au moins lors de l'immobilisation de la capsule à agent d'étanchéité (12) et à la pression atmosphérique dans l'environnement de la capsule à agent d'étanchéité (12), étant sensiblement fermé pour le liquide d'étanchéité (34) et étant perméable pour le liquide d'étanchéité (34) lors d'une augmentation de la pression côté intérieur par rapport à l'enveloppe (32) dans la zone des pores.

5. Capsule à agent d'étanchéité (12) selon l'une des revendications précédentes, au moins un corps rigide étant disposé dans l'espace intérieur de la capsule à agent d'étanchéité (12), lequel présente une rigidité supérieure à celle de l'enveloppe (32).

6. Capsule à agent d'étanchéité (12) selon l'une des revendications précédentes, l'enveloppe (32) possédant au moins une portion rigide (58) qui est conçue pour se rompre au moins partiellement en parties individuelles de la taille d'un grain de riz consécutivement à une compression de l'enveloppe (32), notamment entre le pneu et la jante (26), provoquée par une force extérieure.

7. Capsule à agent d'étanchéité (12) selon l'une des revendications précédentes, comprenant en outre un fil de traction (48) qui se trouve en liaison avec l'enveloppe (32), lequel est conçu pour ouvrir l'enveloppe (32) pour la libération du liquide d'étanchéité (34) consécutivement à un mouvement relatif entre le fil de traction (48) et une portion de l'enveloppe (32) adjacente au fil de traction (48).

8. Capsule à agent d'étanchéité (12) selon l'une des revendications précédentes, comprenant en outre une portion de valve (54) servant à la liaison avec une valve du deux roues, la portion de valve (54) étant réalisée sous la forme d'un clapet anti-retour qui est conçu pour empêcher un écoulement vers l'extérieur du liquide d'étanchéité (34) à travers la portion de valve (54) et permettre un afflux à travers la portion de valve (54).

9. Sous-ensemble roue sans chambre à air pour un deux roues, notamment pour une bicyclette, comprenant une capsule à agent d'étanchéité (12) selon l'une des revendications précédentes et un pneu sans chambre à air comprenant une portion de bande de roulement et deux talons de pneu (18, 20), lesquels sont conçus pour venir en appui respectivement contre un talon de jante (22, 24) d'une jante de deux roues dans l'état monté sur la jante (26) du pneu sans chambre à air (14).

10. Sous-ensemble roue sans chambre à air selon la revendication 9, la capsule à agent d'étanchéité (12) étant montée sur un côté intérieur du pneu sans chambre à air (14) au moyen d'un dispositif de maintien.

11. Sous-ensemble roue sans chambre à air selon la revendication 9 ou 10, l'enveloppe (32) étant au moins dans certaines portions fabriquée dans un matériau qui possède une température de fusion inférieure à la température de fusion du matériau du pneu.

12. Sous-ensemble roue sans chambre à air selon la revendication 9, comprenant une capsule à agent d'étanchéité selon la revendication 8 et une valve de deux roues, la valve de deux roues étant réalisée sous la forme d'une valve à deux voies qui est conçue pour la conduite sélective d'air dans la zone intérieure du pneu et/ou dans l'espace intérieur de la capsule à agent d'étanchéité.

13. Procédé de montage d'un sous-ensemble roue sans chambre à air pour un deux roues, comprenant une capsule à agent d'étanchéité et un pneu sans chambre à air, la capsule à agent d'étanchéité (12) possédant une enveloppe (32) qui rend étanche par rapport à un environnement (38) un espace intérieur de la capsule à agent d'étanchéité (12) rempli au moins partiellement d'un liquide d'étanchéité (34) au moins à une pression atmosphérique qui règne dans l'environnement (38) de la capsule à agent d'étanchéité (12), la capsule à agent d'étanchéité (12) pouvant, dans un état monté du pneu sans chambre à air (14) sur la jante (26), être introduite dans une zone intérieure du pneu sans chambre à air (14) délimitée par le pneu sans chambre à air et la jante (26) afin de libérer au moins une partie du liquide d'étanchéité (34) dans l'environnement de la capsule à agent d'étanchéité (12) dans la zone intérieure du pneu sans chambre à air (14) consécutivement à une ouverture de l'enveloppe (32) dans l'état monté du pneu sans chambre à air (14), le pneu sans chambre à air possédant deux talons de pneu disposés latéralement d'une portion de bande de roulement, lesquels sont configurés pour venir en appui respectivement contre un talon de jante (22, 24) d'une jante de deux roues (26) pour un pneu sans chambre à air, comprenant les étapes d'insertion de la capsule à agent d'étanchéité (12) dans la zone intérieure du pneu sans chambre à air (14), de montage du pneu sans chambre à air (14) avec la capsule à agent d'étanchéité (12) qui se trouve dans la zone intérieure du pneu sans chambre à air (14) sur la jante (26), de mise en pression de la zone intérieure du pneu sans chambre à air (14) à travers une valve qui se trouve en prise avec un trou de valve de la jante (26), **caractérisé par** l'ouverture de l'enveloppe (32) de la capsule à agent d'étanchéité (12) qui se trouve dans la zone intérieure du pneu sans chambre à air (14) mis en pression afin de libérer au moins une partie du liquide d'étanchéité (34) dans l'environnement de la capsule à agent d'étanchéité (12) dans la zone intérieure du pneu sans chambre à air (14).

14. Procédé selon la revendication 13, comprenant le fait de laisser s'écouler au moins une partie du liquide d'étanchéité (34) dans une zone d'un espace intermédiaire entre chaque talon de pneu et le talon de jante (22, 24) associé au moyen d'une force qui agit sur la partie du liquide d'étanchéité (34) afin que la partie du liquide d'étanchéité (34) s'y solidifie.
